# EUROPEAN PATENT APPLICATION

(11) **EP 4 583 282 A1**
(43) Date of publication of application: **09.07.2025**
(21) Application number: 22960570.4
(22) Date of filing: 10.11.2022
(51) Int. Cl.: H01M 50/244, H01M 50/289

(54) **ENERGY STORAGE BOX AND ENERGY STORAGE DEVICE**

(30) Priority: 30.09.2022 WO PCT/CN2022/123362
(71) Applicant: Contemporary Amperex Technology (Hong Kong) Limited, Central (HK)
(72) Inventor: LIU, Yue, Ningde, Fujian 352100 (CN); PENG, Haoran, Ningde, Fujian 352100 (CN)
(74) Representative: Ziebig Hengelhaupt Intellectual Property Attorneys Patentanwaltskanzlei PartGmbB
(86) International application number: PCT/CN2022/131206
(87) International publication number: WO 2024/065972

(57) **Abstract**

An embodiment of the present application provides an energy storage box and an energy storage device, and belongs to the technical field of an energy storage device. An embodiment of the present application provides an energy storage box, including a first column, a plurality of battery brackets, and an adapter holder. The first column extends along a height direction of the energy storage box. The battery bracket is configured to support a battery. The plurality of battery brackets are connected to the column through the adapter holder. The energy storage box has high assembly efficiency.

## Description

### CROSS-REFERENCE TO RELATED APPLICATIONS

The present application claims priority to international patent application No. PCT/CN2022/123362 entitled "ENERGY STORAGE BOX AND ENERGY STORAGE DEVICE", filed on September 30, 2022, which is incorporated herein by reference in its entirety.

### TECHNICAL FIELD

The present application relates to the technical field of an energy storage device, and specifically to an energy storage box and an energy storage device.

### BACKGROUND

An energy storage device is widely used due to extensive market demand for clean energy. The energy storage device includes an energy storage box and a battery disposed in the energy storage box. The battery is usually disposed on a battery bracket so that a relatively large number of batteries are arranged in the energy storage box.

In the related art, the energy storage box has relatively low assembly efficiency. Therefore, how to improve the assembly efficiency of the energy storage box is an urgent problem to be solved.

### SUMMARY

An objective of the present application is to provide an energy storage box and an energy storage device, which have relatively high assembly efficiency.

The present application is realized by the following technical solution:

In a first aspect, the present application provides an energy storage box, including a first column, a plurality of battery brackets, and an adapter holder. The first column extends along a height direction of the energy storage box. The battery bracket is configured to support a battery. The plurality of battery brackets are connected to the first column through the adapter holder.

For the energy storage box according to an embodiment of the present application, the plurality of battery brackets can first be connected to the adapter holder to form a group. The plurality of battery brackets are connected to the first column through the adapter holder. The adapter holder is connected to the first column with relatively high efficiency so that the plurality of battery brackets are assembled with the first column with relatively high efficiency, and the energy storage box has relatively high assembly efficiency.

According to some embodiments of the present application, the adapter holder is detachably connected to the first column. The battery bracket is fixedly connected to the adapter holder.

In the above solution, the adapter holder is detachably connected to the first column, which is conducive to the assembly of the adapter holder with the first column. The battery bracket is fixedly connected to the adapter holder, so that the battery bracket is connected to the adapter holder more stably.

According to some embodiments of the present application, the battery bracket is welded to the adapter holder.

In the above solution, the battery bracket is welded to the adapter holder so that the battery bracket is firmly connected to the adapter holder.

According to some embodiments of the present application, the adapter holder is connected to the first column through a locking member.

In the above solution, the adapter holder is connected to the first column through the locking member to be conducive to assembly.

According to some embodiments of the present application, the adapter holder includes a second column. The second column extends along the height direction of the energy storage box. The second column is detachably connected to the first column.

In the above solution, the second column extends along the height direction of the energy storage box. That is, the second column is parallel to the first column. The second column has a large connection area with the first column, so that the second column is stably connected to the first column.

According to some embodiments of the present application, a plurality of first columns are disposed. A plurality of second columns are disposed. The plurality of second columns are disposed at intervals along a width direction of the energy storage box. Each of the second columns is correspondingly connected to one of the first columns. Each of the battery brackets is connected to the plurality of second columns.

In the above solution, the plurality of second columns are disposed at intervals along the width direction of the energy storage box. Each of the battery brackets is connected to the plurality of second columns so that the battery bracket is connected to the plurality of first columns at a plurality of positions in the width direction of the energy storage box. Therefore, the battery bracket is firmly connected to the first column.

According to some embodiments of the present application, the second column is a one-piece molded structure.

In the above solution, the second column is a one-piece molded structure, which is conducive to process. The second column has relatively high strength.

According to some embodiments of the present application, the adapter holder includes the second column. The second column extends along the height direction of the energy storage box. The second column includes a first wall, a second wall, and a first flap portion. The first wall is affixed to the first column. The second wall extends along a direction away from the first column from the first wall. The first flap portion is connected to one end of the second wall, the end is away from the first wall. The first flap portion and the first wall are positioned on the same side of the second wall or on the two sides of the second wall, respectively. The first flap portion is connected to the battery bracket.

In the above solution, the first wall is affixed to the first column. The second column has a relatively large contact area with the first column, resulting in a better positioning effect between the second column and the first column. The first wall is connected to the first flap portion via the second wall so that the first flap portion is supported, being conducive to the connection of the first flap portion to the battery bracket.

According to some embodiments of the present application, two second walls are disposed. The two second walls are disposed opposite to each other in the width direction of the energy storage box. Two first flap portions are disposed. The two first flap portions are in one-to-one correspondence to the two second walls. Each of the first flap portions extends from one end of the corresponding second wall in a direction close to or away from the other second wall, the end is away from the first wall.

In the above solution, the two second walls and the two first flap portions are both disposed. The second column is capable of being connected to the battery bracket at two positions. The first flap portion extends from one end that is of the corresponding second wall and that is away from the first wall, and extends in the direction close to or away from the other second wall. The first flap portion has a relatively large contact area with the battery bracket, so that the second column is stably connected to the battery bracket.

According to some embodiments of the present application, the two second walls are symmetrically disposed. The two first flap portions are symmetrically disposed.

In the above solution, the two second walls and the two first flap portions are disposed in a form that is conducive to processing and manufacturing. The battery bracket is stably connected to the first column through the second column.

According to some embodiments of the present application, the second column further includes the two second flap portions. The two second flap portions are in one-to-one correspondence to two the first flap portions. Each of the second flap portions extends from one end that is of the corresponding first flap portion and that is away from the second wall, and extends in a direction close to the first column.

In the above solution, the second flap portion is disposed so that the second column has relatively high strength.

According to some embodiments of the present application, the first wall is provided with a first through hole. The first column is provided with a second through hole corresponding to the first through hole. The energy storage box further includes the locking member. The locking member passes through and is disposed in the first through hole and the second through hole to tightly lock the second column with the first column.

In the above solution, the second column and the first column are locked by the locking member, which is conducive to assembly and improves assembly efficiency.

According to some embodiments of the present application, the adapter holder includes the second column. The second column extends along the height direction of the energy storage box. The second column is a hollow structure with a rectangular cross-section.

In the above solution, the second column is disposed parallel to the first column, which is conducive to the assembly and positioning of the second column and the first column. The second column is a square tube, which is simple in a structure and high in overall strength.

According to some embodiments of the present application, the second column includes the first wall and a third wall disposed opposite to each other. The first wall is affixed to the first column. The third wall is connected to the battery bracket. The first wall is provided with the first through hole. The third wall is provided with a third through hole corresponding to the first through hole. The first column is provided with the second through hole corresponding to the first through hole. The energy storage box further includes the locking member. The locking member passes through and is disposed in the first through hole and the second through hole to tightly lock the second column with the first column.

In the above solution, the first wall is affixed to the first column. The second column has a relatively large contact area with the first column, resulting in a better positioning effect between the second column and the first column. The third through hole is disposed so that the locking member enters into the second column. The locking member passes through and is disposed in the first through hole and the second through hole, which is conducive to the assembly of the second column and the first column.

According to some embodiments of the present application, the energy storage box further includes a first sleeve. The first sleeve is disposed within the second column. The two ends of the first sleeve are connected to an edge of the third through hole and an edge of the first through hole, respectively. The locking member passes through and is disposed in the first sleeve.

In the above solution, the first sleeve is disposed in the second column. The locking member passes through and is disposed in the first sleeve. The first sleeve is capable of playing a guide role in the locking member, so that the locking member passes through and is disposed in the first through hole and the second through hole, which improves assembly precision and assembly efficiency.

According to some embodiments of the present application, a first cavity is formed between an inner surface of the second column and an outer surface of the first sleeve. The first sleeve is sealingly connected to the second column to close off the first cavity.

In the above solution, the first sleeve cooperates with the second column to close off the first cavity so that the first cavity is isolated from an external environment, which reduces the risk of the corrosion of the inner surface of the second column.

According to some embodiments of the present application, the third through hole has an aperture larger than that of the first through hole.

In the above solution, the third through hole has the aperture larger than that of the first through hole, which is conducive to the movement of the locking member within the second column.

According to some embodiments of the present application, the first sleeve includes a bottom wall and a side wall. The bottom wall covers the first through hole. The bottom wall is provided with a fourth through hole corresponding to the first through hole. The side wall surrounds the bottom wall. The side wall extends from the bottom wall in the direction away from the first column. One end that is of the side wall and that is away from the bottom wall is connected to an edge of the third through hole. The locking member passes through and is disposed in the fourth through hole.

In the above solution, one end that is of the side wall and that is away from the bottom wall is connected to an edge of the third through hole so that the first sleeve is connected to the second column. The fourth through hole is disposed so that the locking member enters into the first through hole and the second through hole.

According to some embodiments of the present application, the first sleeve further includes a boss. The boss is disposed on one side of the bottom wall, the side is away from the side wall. The boss is disposed in the first through hole. The fourth through hole passes through the boss.

In the above solution, the boss is disposed within the first through hole. The fourth through hole passes through the boss, so that the fourth through hole has a relatively larger size in a lengthwise direction of the energy storage box to guide a bolt.

According to some embodiments of the present application, a gap is formed between the boss and the first column.

In the above solution, a gap is formed between the boss and the first column. The boss is not in contact with the first column, which reduces the risk of the boss interfering with the first column to affect the cooperation of the bottom wall with the first wall.

According to some embodiments of the present application, the third through hole has the same aperture as the first through hole.

In the above solution, the third through hole has the same aperture as the first through hole, which is conducive to processing and manufacturing as well as the assembly of the first sleeve and the second column.

According to some embodiments of the present application, the two ends of the first sleeve are connected to a hole wall of the first through hole and a hole wall of the third through hole, respectively. The locking member passes through and is disposed in the third through hole, the first through hole and the second through hole.

In the above solution, the first sleeve is capable of isolating the inner surface of the second column from an external environment, thereby reducing the risk of the corrosion of the inner surface of the second column.

According to some embodiments of the present application, one end of the locking member is abutted against an outer surface of the third wall.

In the above solution, the end of the locking member is abutted against the outer surface of the third wall, which is capable of both limiting the locking member and being conducive to the firm cooperation of the second column with the first column.

According to some embodiments of the present application, along an axial direction of the first sleeve, the cross-sectional areas of the first sleeve are equal from one end to the other.

In the above solution, the first sleeve is a cylindrical structure with equal diameters at each end, which is simple in structure and easy to process and manufacture.

According to some embodiments of the present application, the adapter holder further includes a blocking member. The blocking member is configured to close off an end opening of the second column.

In the above solution, the blocking member closes off the end opening of the second column, thereby reducing the risk of the corrosion of the inner surface of the second column.

According to some embodiments of the present application, the first column is a hollow structure with a rectangular cross-section. The first column includes a fourth wall and a fifth wall disposed opposite to each other. The fourth wall and the fifth wall are both provided with the second through hole through which a fastener passes.

In the above solution, the first column is a square tube. The fourth wall and the fifth wall are both provided with a second through hole through which the fastener passes. Therefore, the first column is stably connected to the second column.

According to some embodiments of the present application, the energy storage box further includes a second sleeve. The second sleeve is disposed in the first column. The locking member passes through and is disposed in the second sleeve. One end of the second sleeve is connected to the fourth wall, and the other end of the second sleeve is connected to the fifth wall.

In the above solution, the second sleeve is connected to the fourth wall and the fifth wall. The second sleeve is sleeved outside the locking member, which is capable of not only protecting the locking member but also guiding the locking member.

According to some embodiments of the present application, the adapter holder is disposed on the opposite sides of the first column. The locking member passes through the first column and the two adapter holders positioned on the two sides of the first column, so that the two adapter holders are locked to the first column.

In the above solution, the adapter holders are disposed on the both opposite sides of the first column, which has a compact structure. Therefore, the energy storage box is capable of accommodating a larger number of the batteries. The locking member is shared by the two adapter holders, which reduces the number of components and improves assembly efficiency.

According to some embodiments of the present application, the locking member includes the bolt and a nut.

In the above solution, the bolt and the nut fit with each other, which is simple in a structure and easy for assembly and disassembly.

According to some embodiments of the present application, the energy storage box further includes a shell. The first column, the plurality of battery brackets, and the adapter holder are all disposed in the shell. The first column is connected to the shell.

In the above solution, the shell surrounds the exteriors of the first column, the plurality of battery brackets, and the adapter holder, thereby providing safe protection for the battery disposed in the battery bracket, and being capable of reducing the risk of debris, water, and the like falling onto the battery to affect the battery.

According to some embodiments of the present application, the battery bracket is made of a galvanized steel. The adapter holder and the first column are both made of steel.

In the above solution, the galvanized steel has better strength and anti-corrosion effect. The steel has better strength to ensure that the energy storage box has high strength.

According to some embodiments of the present application, the surface of at least one of the battery bracket, the first column, and the adapter holder has an anti-corrosion layer.

In the above solution, the anti-corrosion layer has an anti-corrosion effect, thereby reducing the risk of the corrosion of the component and improving the service life of the component.

In a second aspect, an embodiment of the present application also provides an energy storage device, including a battery and the energy storage box provided in the above embodiments The battery is disposed in the battery bracket.

The above description is only an overview of the technical solutions of the present application, in order to be able to more clearly understand the technical means of the present application, the technical solutions may be implemented in accordance with the contents of the specification, and in order to make the above and other objectives, features and advantages of the present application more apparent and understandable, the specific implementations of the present application are thereby listed.

### BRIEF DESCRIPTION OF DRAWINGS

In order to more clearly illustrate the technical solutions of the embodiments of the present application, the following will briefly introduce the drawings that are desired to be used in the embodiments of the present application. Apparently, the drawings described below are merely some embodiments of the present application, from which other drawings may be obtained by a person of ordinary skill in the art without creative work.
FIG. 1 shows a schematic structural diagram of an energy storage device provided by some embodiments of the present application.
FIG. 2 shows an exploded diagram of a part of a structure of the energy storage device provided by some embodiments of the present application.
FIG. 3 shows an assembly diagram of a battery bracket, an adapter holder, and a first column provided by some embodiments of the present application.
FIG. 4 shows an assembly diagram of the adapter holder and the first column provided by some embodiments of the present application.
FIG. 5 shows a partially enlarged view at A of FIG. 4;
FIG. 6 shows an assembly diagram of a second column and the first column provided by some embodiments of the present application.
FIG. 7 shows an assembly diagram of the second column and the first column provided by some other embodiments of the present application.
FIG. 8 shows an assembly diagram of the second column and the first column provided by some yet embodiments of the present application.
FIG. 9 shows an assembly diagram of the second column and the first column provided by some yet embodiments of the present application.
FIG. 10 shows an assembly diagram of the second column and the first column provided by some yet embodiments of the present application.
FIG. 11 shows a schematic structural diagram of a first sleeve provided by some embodiments of the present application.
FIG. 12 shows an assembly diagram of the second column and the first column provided by some yet embodiments of the present application.
FIG. 13 shows a partially enlarged view at B of FIG. 4;
FIG. 14 shows a schematic diagram of the adapter holders disposed on two sides of the first column provided by some embodiments of the present application.

In the accompanying drawings, the accompanying drawings are not drawn to the actual scale.

Description of reference numerals: 100-energy storage box; 10-first column; 101-second through hole; 11-fourth wall; 12-fifth wall; 20-battery bracket; 30-adapter holder; 31-second column; 311-first wall; 3111-first through hole; 312-second wall; 313-first flap portion; 314-second flap portion; 315-third wall; 3151-third through hole; 316-first cavity; 32-blocking member; 321-first portion; 322-second portion; 4-locking member; 40-bolt; 50-nut; 51-spacer; 60-first sleeve; 61-bottom wall; 611-fourth through hole; 62-side wall; 63-boss; 70-second sleeve; 80-battery compartment; 90-shell; 200-battery; 1000-energy storage device.

### DETAILED DESCRIPTION OF EMBODIMENTS

Implementations of the present application are described in further detail below in conjuncture with the accompanying drawings and embodiments. The detailed description of the following embodiments and the accompanying drawings are used for exemplifying the principles of the present application, but are not to be used for limiting the scope of the present application. That is, the present application is not limited to the described embodiments.

Unless otherwise defined, all technical and scientific terms used herein have the same meanings as are commonly understood by those skilled in the art of the present application. Terms used herein are for the purpose of describing specific embodiments only and are not intended to limit the present application. The terms "comprising" and "having" and any variations thereof in the specification and claims of the present application and the above description of the drawings are intended to cover non-exclusive inclusion.

In the description of the embodiments of the present application, the technical terms "first," "second" and the like are used only to distinguish different objects and cannot be understood to indicate or imply relative importance or to imply the number, specific order or primary and secondary relationship of the indicated technical features.

An "embodiment" referred to herein implies that particular features, structures, or characteristics described in conjunction with an embodiment can be included in at least one embodiment of the present application. The occurrence of this phrase in various positions in the specification does not necessarily refer to the same embodiment, nor is it an independent or alternative embodiment that is mutually exclusive from other embodiments. It is expressly and implicitly understood by the person skilled in the art that the embodiment described herein can be combined with other embodiments.

In the description of embodiments of the present application, the term "a plurality of" refers to more than two (including two). Similarly, the term " plurality of groups" refers to more than two groups (including two groups) and the term "a plurality of sheets" refers to more than two sheets (including two sheets), unless otherwise expressly and specifically limited.

In the description of the embodiments of the present application, orientation or positional relationships indicated by technical terms such as "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the drawings, for ease of description of the embodiments of the present application and simplification of the description only, and these terms do not indicate or imply that the apparatus or element referred to must have a specific orientation or be constructed and operated in a specific orientation, and therefore cannot be construed as limitations to the embodiments of the present application.

In the description of an embodiment of the present application, unless otherwise clearly specified and limited, the technical terms such as "mounted", "connected", "connection", and "fixed" shall be understood in a general sense. For example, these technical terms can be a fixed connection, a detachable connection, or an integrated connection; or can be a mechanical connection or an electrical connection; or can be a direct connection, an indirect connection by using an intermediate medium, or an internal communication of two elements or an interaction of two elements. For the person skilled in the art, the specific meaning of an embodiment of the forgoing terms in the present application can be understood based on specific situations.

An energy storage device is usually a cabinet structure. The energy storage device includes an energy storage box and a plurality of batteries. The inner part of the energy storage box has a battery compartment in which the battery is placed. A battery bracket is disposed in the battery compartment. The battery is disposed on the battery bracket so that the plurality of batteries are arranged inside the battery compartment. For a general energy storage device, a plurality of columns constitute a frame (i.e., a skeleton) of the energy storage box. The battery bracket is usually welded to a column within the frame of the energy storage box. Due to a limited space within the frame of the energy storage box, and because the battery brackets are welded one by one to the columns, the battery brackets are assembled with the columns with relatively low efficiency, thereby affecting the assembly efficiency of the energy storage box. Therefore, the energy storage device has relatively low production efficiency.

Accordingly, to solve the problem of the relatively low assembly efficiency of the energy storage box, the inventor, after in-depth study, designed a technical solution. An adapter holder is disposed between the battery bracket and a first column. A plurality of battery brackets can be first connected to the adapter holder to form a group. When a main body of the energy storage box is assembled, the plurality of battery brackets are connected to the first column through the adapter holder. The adapter holder is connected to the first column with relatively high efficiency so that the plurality of battery brackets are assembled with the first column with relatively high efficiency. The energy storage box has relatively high assembly efficiency, which in turn improves the production efficiency of the energy storage device.

The energy storage device disclosed in an embodiment of the present application is configured to store energy. For example, an apparatus that requires electrical energy requires a device for storing electrical energy.

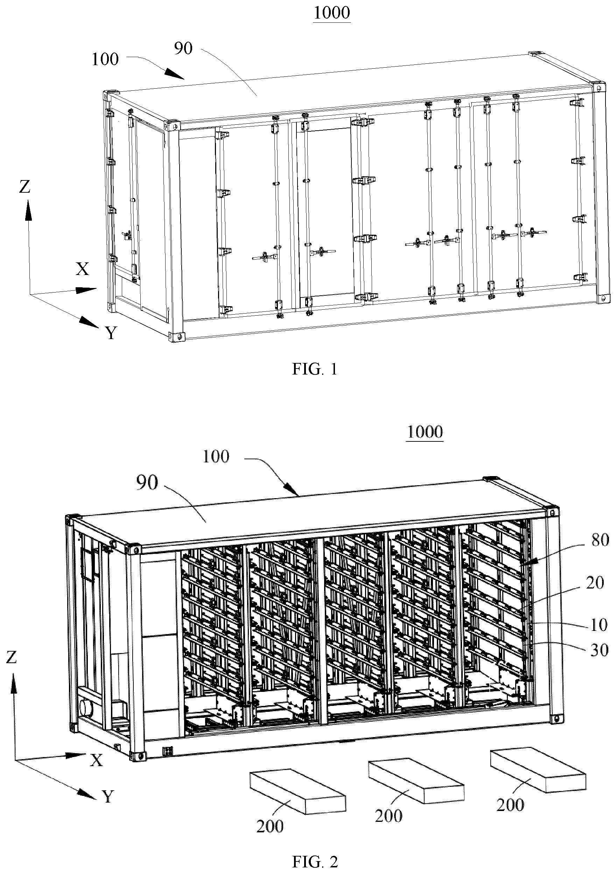

Referring to FIGS. 1 and 2, FIG. 1 shows a schematic structural diagram of an energy storage device provided by some embodiments of the present application. FIG. 2 shows an exploded diagram of a part of a structure of the energy storage device provided by some embodiments of the present application. According to some embodiments of the present application, the present application provides an energy storage device 1000, including an energy storage box 100 and a battery 200. The energy storage box 100 is provided with a battery bracket 20. The battery 200 is disposed in the battery bracket 20. A battery compartment 80 is disposed inside the energy storage box 100. The battery bracket 20 is positioned in the battery compartment 80. The batteries 200 are arranged in a rectangular array inside the battery compartment 80 so that a larger number of the batteries 200 are accommodated inside the battery compartment 80.

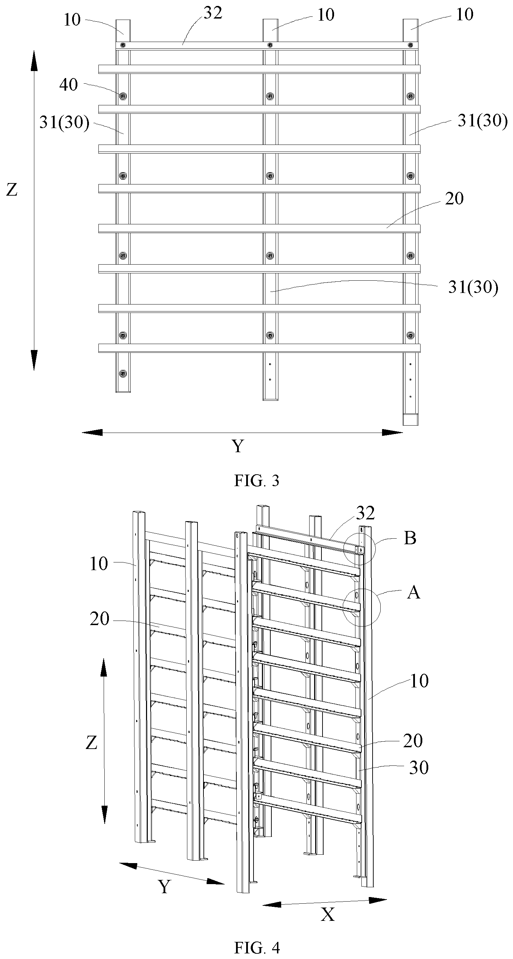

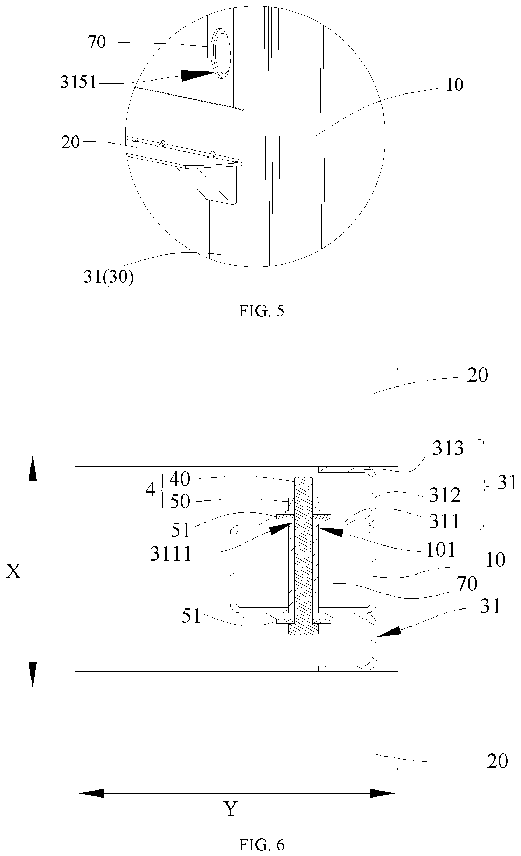

Referring to FIG. 2, and further referring to FIGS. 3 to 5, FIG. 3 shows a schematic diagram of the assembly of the battery bracket, the adapter holder, and the first column provided by some embodiments of the present application. FIG. 4 shows a schematic diagram of the assembly of the adapter holder and the first column provided by some embodiments of the present application. FIG. 5 shows a partially enlarged view at A of FIG. 4. According to some embodiments of the present application, the present application provides an energy storage box 100, including a first column 10, a plurality of battery brackets 20, and an adapter holder 30. The first column 10 extends along a height direction of the energy storage box 100. The battery bracket 20 is configured to support the battery 200. The plurality of battery brackets 20 are connected to the first column 10 through the adapter holder 30.

In the figure, a direction indicated by a letter Z is the height direction of the energy storage box 100. The height direction of the energy storage box 100 is the height direction, i.e., a Z direction, of the energy storage box 100 when the energy storage box 100 is placed in the placement manner of FIG. 1. The height direction Z of the energy storage box 100 can be parallel to the direction of gravity so that the plurality of batteries 200 are stacked and disposed.

The energy storage box 100 can be a rectangular structure. In the figure, a direction indicated by a letter X can be a lengthwise direction of the energy storage box 100. A direction indicated by a letter Y can be a width direction of the energy storage box 100.

The energy storage box 100 is used for devices such as an energy storage prefabricated cabin, an energy storage container, and the like.

The energy storage box 100 can be made of steel, aluminum, or the like.

The first column 10 plays positioning and support roles so that the battery bracket 20 is positioned. The energy storage box 100 can include a plurality of first columns 10. The plurality of first columns 10 can constitute a frame of a battery compartment 80 of the energy storage box 100.

The first column 10 can be made of a metal material such as steel or an aluminum alloy with high strength.

The battery bracket 20 is a component for supporting the battery 200. The battery 200 may be disposed on the battery bracket 20 to support the battery 200. The battery bracket 20 can be disposed so that the plurality of batteries 200 can be stacked and disposed along the direction of gravity inside the energy storage box 100. The battery bracket 20 can be made of a metallic material such as steel or aluminum alloy.

The adapter holder 30 is a component for connecting the plurality of battery brackets 20 to the first column 10. The plurality of battery brackets 20 can be first connected to the adapter holder 30 for easy assembly. The adapter holder 30 can be made of the metallic material such as steel or aluminum alloy.

In the related art, the battery bracket 20 is welded to the first column 10 within the frame of the energy storage box 100. A space within the frame is limited with relative low welding efficiency. In addition, the battery bracket 20 is directly welded to the column. If the battery bracket 20 is positioned in a deviation, an entire product is scrapped, which has a relatively high processing cost.

For the energy storage box 100 according to an embodiment of the present application, the plurality of battery brackets 20 can first be connected to the adapter holder 30 to form a group. When a main body of the energy storage box 100 is assembled, the plurality of battery brackets 30 are connected to the first column 10 through the adapter holder 20. The adapter holder 30 is connected to the first column 10 with relatively high efficiency so that the plurality of battery brackets are assembled with the first column with relatively high efficiency, and the energy storage box 100 has relatively high assembly efficiency. In addition, even when the battery brackets 20 and the adapter holder 30 are positioned in a deviation, the scrapped component has relatively low cost and processing cost.

According to some embodiments of the present application, the adapter holder 30 is detachably connected to the first column 10. The battery bracket 20 is fixedly connected to adapter holder 30.

The adapter holder 30 can be connected to the first column 10 in such a way that the adapter holder 30 is connected to the first column 10 via a bolt, or, the adapter holder 30 is snap-fit to the first column 10, or, the adapter holder 30 is hooked to the first column 10.

The battery bracket 20 is connected to the adapter holder 30 in such a way that the battery bracket 20 is welded to the adapter holder 30, or, the battery bracket 20 is riveted to the adapter holder 30, or, the battery bracket 20 and the adapter holder 30 are connected via the bolt.

In the above solution, the adapter holder 30 is detachably connected to the first column 10, which is conducive to the assembly of the adapter holder 30 and the first column 10. The battery bracket 20 is fixedly connected to the adapter holder 30, so that the battery bracket 20 is connected to the adapter holder 30 more stably.

According to some embodiments of the present application, the battery bracket 20 is welded to the adapter holder 30.

In the above solution, the battery bracket 20 is welded to the adapter holder 30 so that the battery bracket 20 is firmly connected to the adapter holder 30.

According to some embodiments of the present application, the adapter holder 30 is connected to the first column10 through a locking member.

The adapter holder 30 is connected to the first column 10 through the locking member to be conducive to assembly.

According to some embodiments of the present application, as shown in FIG. 3 and FIG. 4, the adapter holder 30 includes a second column 31. The second column 31 extends along the height direction Z of the energy storage box 100. The second column 31 is detachably connected to first column 10.

The second column 31 is a column-shaped structure with a certain length. The second column 31 extends along the height direction Z of the energy storage box 100, i.e., a lengthwise direction of the second column 31 is parallel to the height direction Z of the energy storage box 100.

The second column 31 can be made of the metallic material such as steel or aluminum alloy with high strength.

In the above solution, the second column 31 is parallel to the first column 10. The second column 31 has a large connection area with the first column 10, so that the second column 31 is stably connected to the first column 10.

According to some embodiments of the present application, as shown in FIGS. 3 and 4, a plurality of first columns 10 are disposed. A plurality of second columns 31 are disposed. The plurality of second columns 31 are disposed at intervals along a width direction of the energy storage box 100. Each of the second columns 31 is correspondingly connected to one of the first columns 10. Each of the battery brackets 20 is connected to the plurality of second columns 31.

The plurality of second columns 31 are disposed at intervals along the width direction Y of the energy storage box 100. Correspondingly, the plurality of first columns 10 are also disposed in the width direction Y of the energy storage box 100, so that each of the second columns 31 is correspondingly connected to one of the first columns 10.

Each of the battery brackets 20 is connected to the plurality of second columns 31. The battery bracket 20 extends along the width direction Y of the energy storage box 100 to have a better supporting effect for the battery 200 in the width direction Y of the energy storage box 100.

In the above solution, the plurality of second columns 31 are disposed at intervals along the width direction Y of the energy storage box 100. Each of the battery brackets 20 is connected to the plurality of second columns 31 so that the battery brackets 20 are connected to the plurality of first columns 10 at a plurality of positions in the width direction Y of the energy storage box. Therefore, the battery bracket 20 is firmly connected to the first column 10.

According to some embodiments of the present application, the second column 31 is a one-piece molded structure.

The second column 31 is the one-piece molded structure, for example, the second column 31 can be cast and molded.

In the above solution, the second column 31 is the one-piece molded structure, which is conducive to process. The second column 31 has relatively high strength.

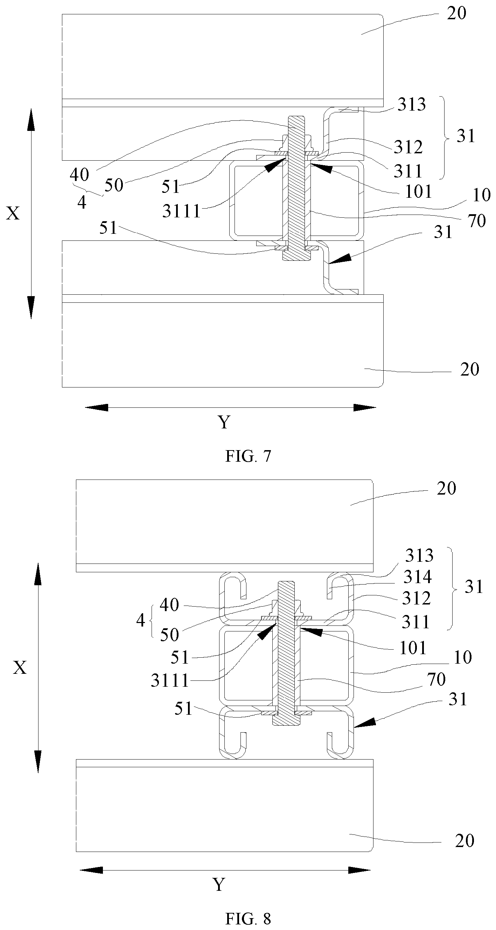

Referring to FIG. 4, and further referring to FIG. 6 and FIG. 7, FIG. 6 shows a schematic diagram of the assembly of the second column and the first column provided by some embodiments of the present application. FIG. 7 shows a schematic diagram of the assembly of the second column and the first column provided by some other embodiments of the present application. According to some embodiments of the present application, the adapter holder 30 includes the second column 31. The second column 31 extends along the height direction Z of the energy storage box 100. The second column 31 includes a first wall 311, a second wall 312, and a first flap portion 313. The first wall 311 is affixed to the first column 10. The second wall 312 extends in a direction away from the first column from the first wall 10. The first flap portion 313 is connected to one end of the second wall 312 away from the first wall 311. The first flap portion 313 and the first wall 311 are positioned on the same side of the second wall 312 or on the two sides of the second wall 312, respectively. The first flap portion 313 is connected to the battery bracket 20.

The first wall 311 is a wall of the second column 31 for being connected to the first column 10. The first wall 311 is affixed to the first column 10. The first wall 311 forms a face contact with the first column 10, so that the first wall 311 has a relatively large contact area with the first column 10.

The second wall 312 extends from the first wall 311, and extends in the direction away from the first column 10, for example, the second wall 312 can be disposed along a lengthwise direction X of the energy storage box 100, i.e., the second wall 312 can be perpendicular to the first wall 311.

As shown in FIG. 6, the first flap portion 313 and the first wall 311 can be disposed on the same side of the second wall 312 along the width direction Y of the energy storage box 100, or, as shown in FIG. 7, the first flap portion 313 and the first wall 311 can be disposed on the two sides of the second wall 312 along the width direction Y of the energy storage box 100, respectively.

In the above solution, the first wall 311 is affixed to the first column 10. The second column 31 has a relatively large contact area with the first column 10, resulting in a better positioning effect between the second column 31 and the first column 10. The second wall 312 is connected to the first flap portion 313 and the first wall 311 so that the first flap portion 313 is supported, being conducive to the connection of the first flap portion 313 to the battery bracket 20.

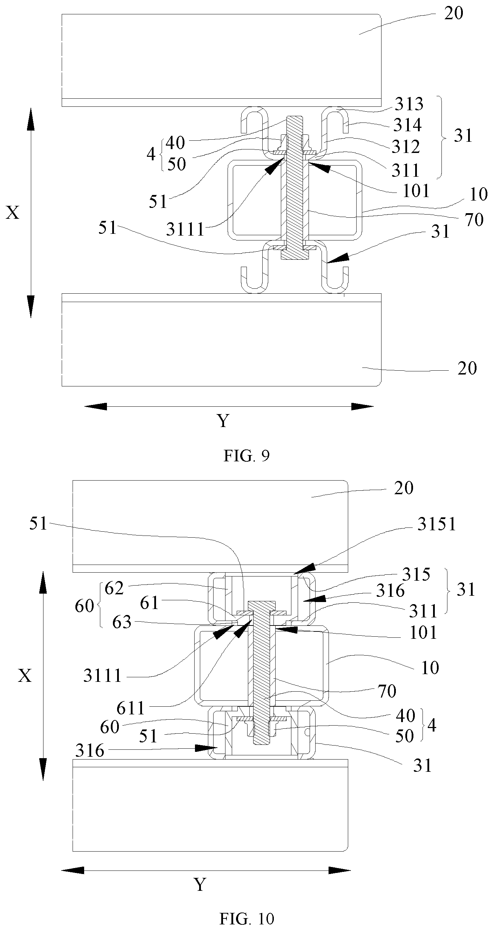

Referring to FIG. 4, and further referring to FIG. 8 and FIG. 9, FIG. 8 shows a schematic diagram of the assembly of the second column and the first column provided by some embodiments of the present application. FIG. 9 shows a schematic diagram of the assembly of the second column and the first column provided by some other embodiments of the present application. According to some embodiments of the present application, two second walls 312 are disposed. The two second walls 312 are disposed opposite to each other along the width direction Y of the energy storage box 100. Two first flap portions 313 are disposed. The two first flap portions 313 are in one-to-one correspondence to the two second walls 312. Each of the first flap portions 313 extends from one end that is of the corresponding second wall 312 and that is away from first wall 311, and extends in a direction close to or away from the other second wall 312.

The two second walls 312 and the two first flap portions 313 are disclosed. The two second walls 312 are disposed opposite to each other along the width direction Y of the energy storage box 100. The second column 31 is capable of being connected to the battery bracket 20 at two positions in the width direction Y of the energy storage box 100. The first flap portion 313 extends from one end that is of the corresponding second wall 312 and that is away from the first wall 311, and extends in a direction close to or away from the other second wall 312. The first flap portion 20 has a relatively large contact area with the battery bracket 20, so that the second column 31 is stably connected to the battery bracket 20.

According to some embodiments of the present application, the two second walls 312 are symmetrically disposed. The two first flap portions 313 are symmetrically disposed.

The two second walls 312 are symmetrically disposed, that is, the two second walls 312 are disposed at the two ends of the first wall 311 along the width direction Y of the energy storage box 100, or the two second walls 312 are disposed in the middle portion of the first wall 311. Optionally, the two second walls 312 are positioned at the two ends of the first wall 311 along the width direction Y of the energy storage box 100.

In the above solution, the two second walls and the two first flap portions are disposed in a form that is conducive to processing and manufacturing. The battery bracket is stably connected to the first column through the second column.

In some embodiments, as shown in FIG. 8, each of the first flap portions 313 extends from one end that is of the corresponding second wall 312 and that is away from the first wall 311, and extends in a direction close to the other second wall 312. The two first flap portions 313, the two second walls 312, and the first wall 311 enclose a space with an opening. The two second walls 312 can have a relative large distance in the width direction Y of the energy storage box 100 so that the first flap portion 313 is connected to the battery bracket 20.

In some other embodiments, as shown in FIG. 9, each of the first flap portions 313 extends from one end that is of the corresponding second wall 312 and that is away from the first wall 311, and extends in a direction away from the other second wall 312. The two second walls 312 and the first wall 311 enclose a space with an opening. Therefore, when the battery bracket 20 is welded to the first flap portions 313, even if welding slags fall onto the wall surface of the second column 31 positioned in the space, the wall surface is easy to clean.

According to some embodiments of the present application, as shown in FIG. 8 and FIG. 9, the second column 31 further includes two second flap portions 314. The two second flap portions 314 are in one-to-one correspondence to the two first flap portions 313. Each of the second flap portions extends from one end that is of the corresponding first flap portion 313 and that is away from the second wall 312, and extends in a direction close to the first column 10.

The second flap portion 314 is connected to one end of the first flap portion 313, the end is away from the second wall 312. The second flap portion 314 is bent relative to the first flap portion 313 so that the second flap portion 314 extends in a direction from the corresponding first flap portion 313 to the first column 10. Optionally, an extension direction of the second flap portion 314 can be parallel to the lengthwise direction X of the energy storage box 100.

In the above solution, the second flap portions 314 is disposed so that the second column 31 has a relatively high strength. For example, when the second column 31 is a one-piece molded structure, the second column 31 has relatively high overall strength.

According to some embodiments of the present application, as shown in FIG. 6 and FIG. 9, the first wall 311 is provided with a first through hole 3111. The first column 10 is provided with a second through hole 3111 corresponding to the first through hole 101. The energy storage box 100 further includes a locking member 4. The locking member 4 passes through and is disposed in the first through hole 3111 and the second through hole 101 to tightly lock the second column 31 with the first column 10.

The first through hole 3111 can be a hole passing through the first wall 311 along the lengthwise direction X of the energy storage box 100.

The second through hole 101 can be a hole passing through the first column 10 along the lengthwise direction X of the energy storage box 100. The second through hole 101 can be coaxially disposed with the first through hole 3111 so that the locking member 4 passes through the first through hole 3111 and the second through hole 101.

For example, the locking member 4 can include a pin shaft. The pin shaft passes through and is disposed in the first through hole 3111 and the second through hole 101. The pin shaft has an interference fit with the first through hole 3111 and the second through hole 101. As another example, the locking member 4 can include a bolt 40 and a nut 50. The bolt 40 can pass through and is disposed in the first through hole 3111 and the second through hole 101 in sequence. The nut 50 can be positioned on one side of the first column 10, the side is away from the adapter holder 30. The bolt 40 fits with the nut 50 after passing through the second through hole 101, or, the bolt 40 can fit with the nut 50 after passing through the second through hole 101 and the first through hole 3111.

In the above solution, the second column 31 and the first column 10 are locked by the locking member 4, which is conducive to assembly and improves assembly efficiency.

According to some embodiments of the present application, as shown in FIG. 4, the adapter holder 30 further includes a blocking member 32. The blocking member 32 is disposed at the end portion of the second column 31. The plurality of the second columns 31 along the width direction Y of the energy storage box 100 can be connected to one blocking member 32. Each of the second columns 31 is connected to one battery bracket 20 to form one assembly unit, so that the adapter holder 30 and the first column 10 are assembled and positioned.

Referring to FIG.10, FIG. 10 shows an assembly diagram of the second column and the first column provided by some yet embodiments of the present application. According to some embodiments of the present application, the adapter holder 30 includes the second column 31. The second column Z extends along the height direction of the energy storage box 100. The second column 31 is a hollow structure with a rectangular cross-section.

The second column 31 extends along the height direction Z of the energy storage box 100, i.e., the second column 31 is disposed parallel to the first column 10.

The cross-section indicates a section of the second column 31 cut by a plane perpendicular to the extension direction of the second column.

In the above solution, the second column 31 is disposed parallel to the first column 10, which is conducive to the assembly and positioning of the second column 31 and the first column 10. The second column 31 is a square tube, which is simple in a structure and high in overall strength.

According to some embodiments of the present application, as shown in FIG. 10, the second column 31 includes the first wall and a third wall 315 disposed opposite to each other. The first wall 311 is affixed to the first column 10. The third wall 315 is connected to the battery bracket 20. The first wall 311 is provided with the first through hole 3111. The third wall 315 is provided with a third through hole 3151 corresponding to the first through hole 3111. The first column 10 is provided with the second through hole 101 corresponding to the first through hole 3111. The energy storage box 100 also includes the locking member 4. The locking member 4 passes through and is disposed in the first through hole and the second through hole to tightly lock the second column 31 with the first column 10.

The first through hole 3111 can pass through the first wall 311 in the lengthwise direction X of the energy storage box 100.The first through hole 3111 can pass through the third wall 315 in the lengthwise direction X of the energy storage box 100. The third through hole 3151 is disposed in correspondence with the first through hole 3111. The third through hole 3151 can be disposed coaxially with the first through hole 3111 so that the locking member 4 passes through and is disposed in the first through hole 3111.

The second through hole 101 can pass through the first column 10 in the lengthwise direction X of the energy storage box 100. The second through hole 101 is disposed in correspondence with the first through hole 3111. The second through hole 101 can be disposed coaxially with the first through hole 3111.

For example, the locking member 4 can include the pin shaft. The pin shaft passes through the first through hole 3111 and the second through hole 101 in sequence. As another example, the locking member 4 can include the bolt 40 and the nut 50. The bolt 40 is connected to the nut 50 after passing through the first through hole and the second through hole 101 in sequence, or, the bolt 40 can be connected to the nut 50 after passing through the second through hole 101 and the first through hole 3111 in sequence.

In the above solution, the first wall 311 is affixed to the first column 10. The second column 31 has a relatively large contact with the first column 10, resulting in a better positioning effect between the second column 31 and the first column 10. The third through hole 3151 is disposed so that the locking member 4 enters into the second column 31. The locking member 4 passes through and is disposed in the first through hole 3111 and the second through hole 101, which is conducive to the assembly of the second column 31 and the first column 10.

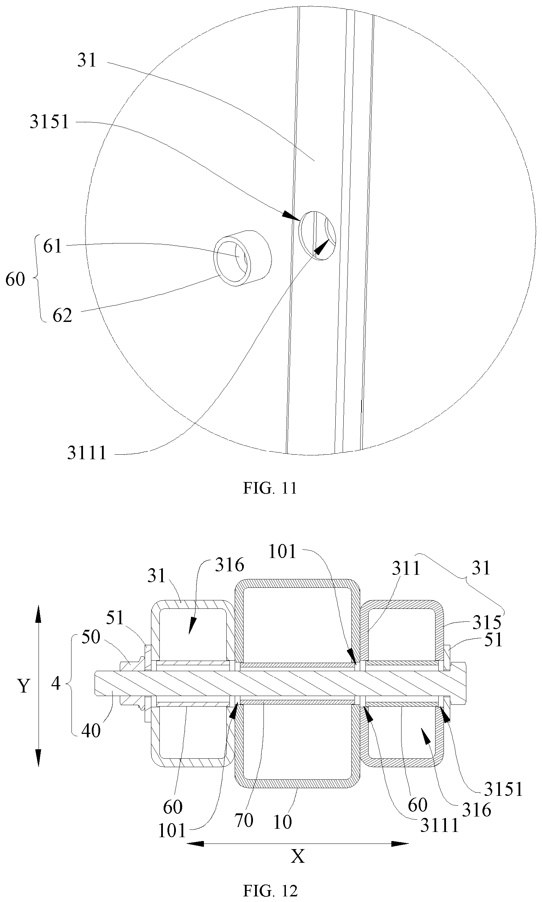

Referring to FIG. 10, and further referring to FIG. 11 and FIG. 12, FIG. 11 shows a schematic structural diagram of a first sleeve provided by some embodiments of the present application. FIG. 12 shows a schematic diagram of the assembly of the second column and the first column provided by some yet embodiments of the present application. According to some embodiments of the present application, the energy storage box 100 further includes a first sleeve 60. The first sleeve 60 is disposed within the second column 31. The two ends of the first sleeve 60 are connected to the edge of the third through hole 3151 and the edge of first through hole 3111, respectively. The locking member 4 passes through and is disposed in the first sleeve 60.

The first sleeve 60 is a hollow cylindrical structure. The two ends of the first sleeve 60 are opened so that the locking member 4 passes through and is disposed.

One end of the first sleeve 60 can be connected to the third wall 315 at a position where the third through hole 3151 is disposed, or, can be connected to a hole wall of the third through hole 3151. Similarly, the other end of the first sleeve 60 can be connected to the first wall 311 at a position where the first through hole 3111 is disposed, or, can be connected to a hole wall of the first through hole 3111.

In the above solution, the first sleeve 60 is disposed in the second column 31. The locking member 4 passes through and is disposed in the first sleeve 60. The first sleeve 60 is capable of 4 playing a guide role in the locking member 4, so that the locking member 4 passes through and is disposed in the first through hole 3111 and the second through hole 101, which improves assembly precision and efficiency.

According to some embodiments of the present application, a first cavity 316 is formed between an inner surface of second column 31 and an outer surface of the first sleeve 60. The first sleeve 60 is sealingly connected to the second column 31 to close off the first cavity 316.

A chamber enclosed between the outer surface of the first sleeve 60 and the inner surface of the second column 31 is the first cavity 316. The two ends of the first sleeve 60 are sealingly connected to the second column 31, i.e., one end of the first sleeve 60 is sealingly connected to the first wall 311, and the other end of the first sleeve 60 is sealingly connected to the third wall 315. When one end of the first sleeve 60 is sealingly connected to the first wall 311, one end of the first sleeve 60 is sealingly connected to the surface of the first wall 311, or, the end portion of one end of the first sleeve 60 is sealingly connected to the hole wall of the first through hole 3111. When the other end of the first sleeve 60 is sealingly connected to the third wall 315, the other end of the first sleeve 60 can be sealingly connected to the surface of the third wall 315, or, the other end of the first sleeve 60 can be sealingly connected to the hole wall of the third through hole 3151.

The first sleeve 60 cooperates with the second column to close off the first cavity 316 so that the first cavity 316 is isolated from an external environment, which reduces the risk of the corrosion of the inner surface of the second column 31.

According to some embodiments of the present application, as shown in FIG. 10, the third through hole 3151 has an aperture larger than that of the first through hole 3111.

The first through hole 3111 and the third through hole 3151 can both be round holes, which are easy to process. Therefore, the locking member 4 can pass through and be disposed in the round holes.

The third through hole 3151 has an aperture larger than that of the first through hole 3111. When the third through hole 3151 is coaxially disposed with the first through hole 3111, difficulty for the locking member 4 to enter into the second column 31 can be reduced, and it is easy for the locking member 4 to enter into the first through hole 3111.

In the above solution, the third through hole 3151 has the aperture larger than that of the first through hole 3111, which is conducive to the movement of the locking member 4 within the second column 31.

Referring to FIG. 10, and further referring to FIG. 11, according to some embodiments of the present application, the first sleeve 60 includes a bottom wall 61 and a side wall 62. The bottom wall 61 covers the first through hole 3111. The bottom wall 61 is provided with a fourth through hole 611 corresponding to the first through hole 3111. The side wall 62 surrounds the bottom wall 61. The side wall 62 extends from the bottom wall 61, and extends in the direction away from the first column 10. One end that is of the side wall 62 and that is away from the bottom wall 61 is connected to the edge of the third through hole 3151. The locking member 4 passes through and is disposed in the fourth through hole 611.

The first sleeve 60 is a cylindrical structure, for example, the first sleeve 60 can be cylindrical. The first sleeve 60 is disposed within the second column 31. The first sleeve 60 does not protrude from an outer surface of the second column 31.

The bottom wall 61 covers the first through hole 3111, for example, the bottom wall 61 can be affixed to the first wall 311. The bottom wall 61 shelters from the first through hole 3111, so that the bottom wall 61 closes off the first through hole 3111. The fourth through hole 611 passes through the bottom wall 61 and is in communication with the first through hole 3111 so that the locking member 4 is capable of passing through and being disposed in the first through hole 3111 after passing through the fourth through hole 611. The fourth through hole 611 is disposed in correspondence with the first through hole 3111. The fourth through hole 611 can be disposed coaxially with the first through hole 3111.

The side wall 62 extends from the bottom wall 61, and extends in the direction away from the first column 10. The extension direction of the side wall 62 can be parallel to the lengthwise direction X of the energy storage box 100.

In the above solution, one end that is of the side wall 62 and that is away from the bottom wall 61 is connected to the edge of the third through hole 3151 so that the first sleeve 60 is connected to the second column 31. The fourth through hole 611 is disposed so that the locking member 4 enters into the first through hole 3111 and the second through hole 101.

According to some embodiments of the present application, one end that is of the side wall 62 and that is away from the bottom wall 61 is sealingly connected to the edge of the third through hole 3151.

One end that is of the side wall 62 and that is away from the bottom wall 61 is sealingly connected to the edge of the third through hole 3151, for example, one end that is of the side wall 62 and that is away from the bottom wall 61 can be positioned within the third through hole 3151. One end that is of the side wall 62 and that is away from the bottom wall 61 is sealingly connected to the hole wall of the third through hole 3151; or, one end that is of the side wall 62 and that is away from the bottom wall 61 protrudes from the third wall 315. The outer peripheral surface that is of the side wall 62 and that is away from the bottom wall 61 is sealingly connected to the third wall 315 at the location where the third through hole 3151 is disposed.

One end that is of the side wall 62 and that is away from the bottom wall 61 is sealingly connected to the edge of the third through hole 3151 in a variety of ways, for example, one end that is of the side wall 62 and that is away from the bottom wall 61 is sealed to the edge of the third through hole 3151 by welding, or, one end that is of the side wall 62 and that is away from the bottom wall 61 is sealingly connected to the edge of the third through hole 3151 by a sealant, or, one end of the side wall 62 away from the bottom wall 61 is sealingly connected the edge of the third through hole 3151 by the cooperation of the welding with the sealant.

In the above solution, the side wall 62 is sealingly connected to the edge of the third through hole 3151. The bottom wall 61 covers the first through hole 3111. The first sleeve 60 is capable of isolating the inner surface of the second column 31 from the external environment, thereby reducing the risk of the corrosion of the inner surface of the second column 31.

The bottom wall 61 is affixed to the first wall 311 to close off the first through hole 3111. One end that is of the side wall 62 and that is away from the bottom wall 61 is sealingly connected to the edge of the third through hole 3151, so that the interior and exterior of the first cavity 316 are isolated from each other by the first sleeve 60 and the second column 31, thereby reducing the risk of the corrosion of the interior surface of the second column 31.

According to some embodiments of the present application, as shown in FIG. 10, the first sleeve 60 further includes a boss 63. The boss 63 is disposed on the side of the bottom wall 61, the side is away from the side wall 62. The boss 63 is disposed within the first through hole 3111. The fourth through hole 611 passes through the boss 63.

The surface of the bottom wall 61 facing the first wall 311 can be affixed to the first wall 311. The boss 63 protrudes from the bottom wall 61 along the lengthwise direction X of the energy storage box 100.

The boss 63 is disposed within the first through hole 3111. The fourth through hole 611 passes through the boss 63, so that the fourth through hole 611 has a relatively large size in the lengthwise direction X of the energy storage box 100 to guide the locking member 4.

According to some embodiments of the present application, as shown in FIG. 10, a gap is formed between the boss 63 and the first column 10.

The bottom wall 61 covers the first through hole 3111 so that the bottom wall 61 is affixed to the first wall 311. If the boss 63 is abutted against the first column 10, it is easy to lead to the separation of the bottom wall 61 from the first wall 311, which affects the fitting of the bottom wall 61 with the first wall 311.

A gap is formed between the boss 63 and the first column 10. The boss 63 is not in contact with the first column 10, which reduces the risk of the boss 63 interfering with the first column 10 to affect the fitting of the bottom wall 61 with the first wall 311.

Referring to FIG. 4, and further referring to FIG. 12, according to some embodiments of the present application, the third through hole 3151 has the same aperture as the first through hole 3111.

When the third through hole 3151 has the same aperture as the first through hole 3111, the first sleeve 60 can be a cylinder in a structure with an equal diameter. The two ends of the first sleeve 60 have the same structure, which is easy to process and manufacture.

In the above solution, the third through hole 3151 has the same aperture as the first through hole 3111, which is conducive to processing and manufacturing as well as the assembly of the first sleeve 60 and the second column 31.

According to some embodiments of the present application, the two ends of the first sleeve 60 are connected to the hole wall of the first through hole 3111 and the hole wall of the third through hole 3151, respectively. The locking member 4 passes through and is disposed in the third through hole 3151, the first through hole 3111 and the second through hole 101.

For example, the locking member 4 can include the pin shaft. the pin shaft can pass through and be disposed in the third through hole 3151, the first through hole 3111, and the second through hole 101 in sequence. As another example, the locking member 4 can include the bolt 40 and the nut 50. The bolt 40 is connected to the nut 50 after passing through the first through hole 3151, the first through hole 3111, and the second through hole 101 in sequence, or, the bolt 40 can be connected to the nut 50 after passing through the second through hole 101, the first through hole 3111, and the third through hole 3151 in sequence.

The end portion of the locking member 4 can be positioned on one side of the second column 31, the side is away from the first column 10, so that the locking member 4 locks the second column 31 to the first column 10.

The locking member 4 passes through and is disposed in the first sleeve 60. The locking member 4 is protected by the first sleeve 60, and the first sleeve 60 plays a guide role in the locking member 4.

In the above solution, the first sleeve 60 is capable of isolating the inner surface of the second column 31 from the external environment, thereby reducing the risk of the corrosion of the inner surface of the second column 31.

According to some embodiments of the present application, one end portion of the locking member 4 is abutted against an outer surface of the third wall 315.

For example, the locking member 4 can include the pin shaft. The end portion of the pin shaft is larger in size compared to other parts. An end portion of the pin shaft is positioned at the exterior of the second column 31. The end portion of the pin shaft is abutted against the exterior surface of the third wall 315. As another example, the locking member 4 can include a bolt 40 and a nut 50. When the bolt 40 passes through and is disposed in the third through hole 3151, the first through hole 3111, and the second through hole 101, the end portion (the head portion) of the bolt 40 and the nut 50 are positioned on the two sides of the first column 10. The end portion (the head portion) of the bolt 40 can be abutted against the outer surface of the third wall 315. When the second columns 31 are both disposed on the two sides of the first column 10, one bolt 40 can be shared by the first column 10 and the two second columns 31. At this time, the end portion of the bolt 40 and the nut 50 can both be abutted against the outer surface of the third wall 315.

In the above solution, the end portion of the locking member 4 is abutted against the outer surface of the third wall 315, which is capable of both limiting the locking member 4 and being conducive to the firm cooperation of the second column 31 with the first column 10.

In the manufacturing process of the energy storage box 100, because the first sleeve 60 isolates the inner surface of the second column 31 from the external environment, it is possible to eliminate the need for anti-corrosion treatment of the inner surface of the second column 31, thereby reducing the manufacturing process. However, it is necessary to seal end openings at the two ends of the second column 31 so that the internal environment of the second column 31 is completely isolated from the external environment.

According to some embodiments of the present application, along the axial direction of the first sleeve 60, the cross-sectional areas of the first sleeve 60 are equal from one end to the other.

The cross-sectional area of the first sleeve 60 is defined as the area of a section cut by a plane perpendicular to the axial direction of the first sleeve 60.

In the above solution, the cross-sectional areas of the first sleeve 60 are equal from one end to the other. The first sleeve 60 can be a cylindrical structure, which is simple in structure and easy to process and manufacture.

According to some embodiments of the present application, the locking member 4 includes the bolt 40 and the nut 50. The energy storage box 100 further includes the first sleeve 60. The first sleeve 60 is positioned within the second column 31. The first sleeve 60 is in a hollow cylindrical structure. The first sleeve 60 is sleeved outside the bolt 40. The two ends of the first sleeve 60 are positioned within the third through hole 3151 and the first through hole 3111, respectively, and welded to the hole wall of the third through hole 3151 and the hole wall of the first through hole 3111, respectively, which not only has a larger connection area with the second column 31, but also reduces an occupied space. The energy storage box 100 further includes a spacer 51. The spacer 51 is sleeved outside the bolt 40. The spacer 51 is positioned on one side of the second column 31, the side is away from the first column 10. When the bolt 40 fits with the nut 50 to lock the second column 31 to the first column 10, as shown in FIG. 12, the second columns 31 are disposed on both sides of the first column 10. The bolt 40 passes through and is inserted in the second column 31, the first column 10, and the other second column 31 in sequence. The spacers 51 are disposed at the two ends of the bolt 40, respectively. The spacer is abutted against and sealingly fits with the third wall 315 of the second column 31 to close off the third through hole 3151 of the second column 31, thereby isolating the first cavity 316 from the external environment. The spacer 51 is disposed to increase the contact area and reduce the risk of the surface of the third wall 315 being crushed by an excessive locking attachment force.

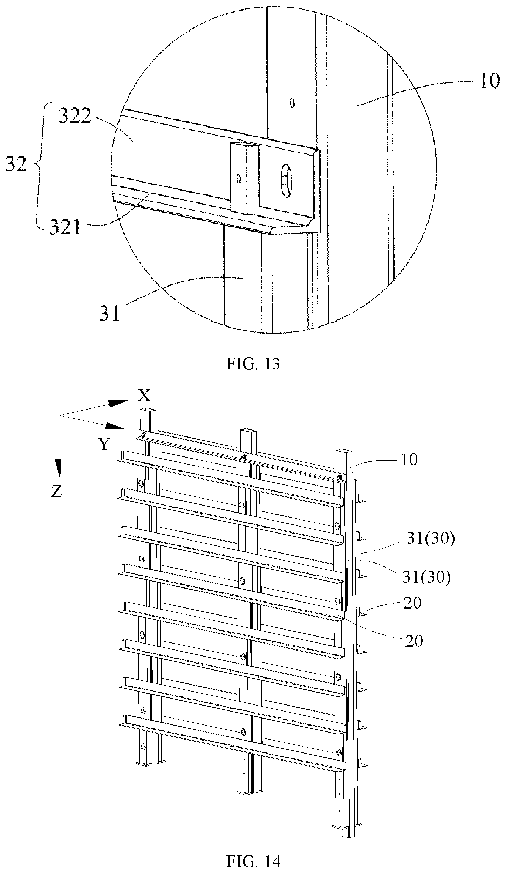

Referring to FIG. 4, and further referring to FIG. 13, FIG. 13 shows a partially enlarged view at B of FIG. 4. According to some embodiments of the present application, the adapter holder 30 further includes the blocking member 32. The blocking member 32 is configured to close off the end opening of the second column 31.

The blocking member 32 is a component for closing off the end opening of the second column 31. The blocking member 32 is connected to the end portion of the second column 31 to isolate the interior of the second column 31 from the outer world.

In some embodiments, the blocking member 32 can be sealingly connected to the end opening of the second column 31 by the welding, or, the blocking member 32 can be sealingly connected to the end opening of the second column 31 by a sealant, or, the blocking member 32 may be sealingly connected to the end opening of the second column 31 by the cooperation of the welding with the sealant. The end opening of the second column 31 is sealed by the blocking member 32 to prevent air circulation between the interior and the exterior of the second column 31.

In the above solution, the blocking member 32 closes off the end opening of the second column 31, thereby reducing the risk of the corrosion of the inner surface of the second column 31.

In some embodiments, as shown in FIG. 13, the blocking member 32 is in an L-shape. The blocking member 32 includes a first portion 321 and a second portion 322. The first portion 321 closes off the end opening of the second column 31. The second portion 322 is affixed to the first column 10 so that the blocking member 32 and the first column 10 are positioned.

In an embodiment in which the plurality of second columns 31 are disposed at intervals along the width direction Y of the energy storage box 100, the plurality of second columns 31 are connected by the blocking member 32 so that the plurality of second columns 31 are positioned.

Referring to FIGS. 8 to 10, and FIG. 12, according to some embodiments of the present application, the first column 10 is a hollow structure with a rectangular cross-section. The first column 10 includes a fourth wall 11 and a fifth wall 12 disposed opposite to each other. The fourth wall 11 and the fifth wall 12 are each provided with the second through hole 101 through which the locking member 4 passes.

The cross-section may be a section of the first column 10 sectioned by a plane perpendicular to the extension direction thereof.

The fourth wall 11 and the fifth wall 12 are two walls of the first column 10 disposed opposite to each other along the lengthwise direction X of the energy storage box 100. The fourth wall 11 and the fifth wall 12 are both provided with the second through hole 101 through which the locking member 4 passes. The locking member 4 passes through the fourth wall 11 and the fifth wall 12. When the locking member 4 includes the bolt 40 and the nut 50, the first wall 311 can be affixed to the fourth wall 11. The nut 50 can be positioned on a side of the first column 10 provided with the fifth wall 12. The bolt 40 fits with the nut 50 after passing through the first through hole 3111 and the second through hole 101.

In the above solution, the first column 10 is a square tube. The fourth wall 11 and the fifth wall 12 are both provided with the second through hole 101 through which a locking member 4 passes. Therefore, the first column 10 is stably connected to the second column 31.

Referring to FIGS. 8 to 10, and FIG. 12, according to some embodiments of the present application, the energy storage box 100 further includes a second sleeve 70. The second sleeve 70 is disposed within the first column 10. The locking member 4 passes through and is disposed in the second sleeve 70. One end of the second sleeve 70 is connected to the fourth wall 11, and the other end of the second sleeve 70 is connected to the fifth wall 12.

The second sleeve 70 is a cylinder-shaped structure disposed within the first column 10. The two ends of the second sleeve 70 do not protrude from an outer surface of the first column 10.

The two ends of the second sleeve 70 can be welded to the fourth wall 11 and the fifth wall 12, respectively, so that the second sleeve 70 is stably connected to the first column 10.

In the above solution, the second sleeve 70 is connected to the fourth wall 11 and the fifth wall 12. The second sleeve 70 is sleeved outside the locking member 4, which is capable of not only protecting the locking member 4 but also 4 guiding the locking member 4.

In some embodiments, one end of the second sleeve 70 is sealingly connected to the edge of the second through hole 101 of the fourth wall 11, and the other end of the second sleeve 70 is sealingly connected to the edge of the second through hole 101 of the fifth wall 12. The second sleeve 70 isolates the interior of the first column 10 from the outer world, thereby reducing the risk of the corrosion of the interior surface of the first column 10.

In some embodiments, one end of the second sleeve 70 is sealingly connected to the edge of the second through hole 101 of the fourth wall 11 by the welding, and the other end of the second sleeve 70 is sealingly connected to the edge of the second through hole 101 of the fifth wall 12 by the welding; or, one end of the second sleeve 70 is sealingly connected to the edge of the second through hole 101 of the fourth wall 11 by the sealant, and the other end of the second sleeve 70 is sealingly connected to the edge of the second through hole 101 of the fifth wall 12 by the sealant; or, one end of the second sleeve 70 is sealingly connected to the edge of the second through hole 101 of the fourth wall 11 by the cooperation of the welding with the sealant, and the other end of the second sleeve 70 is sealingly connected to the edge of the second through hole 101 of the fifth wall 12 by the cooperation of the welding with the sealant.

In some embodiments, the energy storage box 100 includes a plurality of first columns 10. The plurality of first columns 10 are arranged in a rectangular array. Some of the plurality of first columns 10 are disposed at intervals along the width direction Y of the energy storage box 100 to form a first combination. Some of the plurality of first columns 10 are disposed at intervals along the lengthwise direction X of the energy storage box 100 to form a second combination. The distance between the first columns 10 of the two adjacent second combinations is greater than the width of the battery 200 and less than half of the length of the battery 200 to be conducive to the assembly of the battery 200.

Along the lengthwise direction X of the energy storage box 100, the plurality of first columns 10 can be positioned at the end portion and the middle portion of the battery compartment 80 within the energy storage box 100. The first column 10 positioned at the end portion is provided with the adapter holder 30 on only the one side thereof in the lengthwise direction X of the energy storage box 100. The first column 10 positioned at the middle portion is provided with the adapter holder 30 on the both opposite sides thereof in the lengthwise direction X of the energy storage box 100.

When the plurality of first columns 10 are arranged in the rectangular array, a space for accommodating the battery 200 is formed between two adjacent first columns 10 in the lengthwise direction X of the energy storage box 100. The battery 200 positioned in the space is supported jointly by the battery brackets 20 connected to the two first columns 10. For example, the battery 200 is supported jointly by the battery brackets 20 positioned at the same height and distributed on the two first columns 10.

Referring to FIGS. 8 to10, and FIG. 12, and further referring to FIG. 14, FIG. 14 shows a schematic diagram of the adapter holder disposed on the two sides of the first column provided by some embodiments of the present application. According to some embodiments of the present application, the adapter holders 30 are disposed on the opposite sides of the first column 10. The locking member 4 passes the first column 10 and the two adapter holders 30 positioned on the two sides of the first column 10, so that the two adapter holders 30 are locked to the first column 10.

Along the lengthwise direction X of the energy storage box 100, the adapter holders 30 are disposed on the opposite sides of the first column 10.

The locking member 4 passes through the first column 10 and the two adapter holders 30 shifted on the two sides of the first column 10, i.e., the first through holes 3111 of the adapter holders 30 on the two sides of the first column 10 are coaxially disposed. The locking member 4 is shared by the two adapter holders 30 positioned on the two sides of the first column 10.

In the above solution, the adapter holders 30 are disposed on both opposite sides of the first column 10, which has a compact structure. Therefore, the energy storage box 100 is capable of accommodating a larger number of the batteries 200. The locking member 4 is shared by the two adapter holders 30, which reduces the number of components and improves assembly efficiency.

According to some embodiments of the present application, as shown in FIGS. 8 to 10, and FIG. 12, the locking member 4 includes the bolt 40 and the nut 50. The nut 50 fits with the bolt.

The bolt 40 passes through and is disposed in the first through hole 3111 and the second through hole 101 to tightly lock the second column 31 with the first column 10.

The bolt 40 fits with the nut 50, which is simple in a structure and easy for assembly and disassembly.

In the above embodiment, as shown in FIGS. 8 to 10, and FIG. 12, the energy storage box 100 further includes the spacer 51. The spacer 51 is sleeved at the bolt 40. Each of the bolts 40 is sleeved with the two spacers 51. One spacer 51 is affixed to the head portion of the bolt 40, and the other spacer 51 is affixed to the nut 50.

In the above embodiment, the number of the bolts 40 disposed on one first column 10 is smaller than that of the battery brackets 20 fitting with the first column 10.

According to some embodiments of the present application, the energy storage box 100 further includes a shell 90. The first column 10, the plurality of battery brackets 20 and the adapter holder 30 are all disposed in the shell 90. The first column 10 is connected to the shell 90.

The shell 90 is a component for isolating the interior of the energy storage box 100 from the external environment.

In the manufacturing process of the energy storage box 100, the first column 10 can be assembled with the shell 90 to form the skeleton of the energy storage box 100. The plurality of first columns 10 surround the battery compartment 80. Then, a structure in which the battery bracket 20 is assembled with the adapter holder 30 is connected to the first column 10.

In the above solution, the shell 90 surrounds the exteriors 30 of the first column 10, the plurality of battery brackets 20, and the adapter holder 30, thereby providing safe protection for the battery 200 disposed in the battery bracket 20, and being capable of reducing the risk of debris, water, and the like falling onto the battery 200 to affect the battery 200.

According to some embodiments of the present application, the battery bracket 20 is made of a galvanized steel. The adapter holder 30 and the first column 10 are both made of steel.

The battery bracket 20 can be made of a galvanized steel plate.

In the above solution, the galvanized steel has better strength and anti-corrosion effect. The steel has better strength to ensure that the energy storage box 100 has high strength.

According to some embodiments of the present application, the surface of at least one of the battery bracket 20, the first column 10, and the adapter holder 30 has an anti-corrosion layer.

The anti-corrosion layer is formed from an anti-corrosion material applied to the surface of the component. The anti-corrosion layer can be an epoxy coating, an acrylic polyurethane coating, an epoxy zinc-rich coating, or a micaceous iron epoxy coating.

The anti-corrosion layer has the effect of anti-corrosion, which reduces the risk of the corrosion of the component provided with the anti-corrosion layer, and increases the service life of the component.

When the battery bracket 20 is welded to the adapter holder 30, welding slags are easily generated when the galvanized steel plate is welded to steel. Therefore, after the spattered welding slags fall onto the surface of the adapter holder 30, the surface of the adapter holder 30 is uneven. Before the surface of the adapter holder 30 is anti-corroded, the welding slags on the surface of the adapter holder 30 need to be removed to improve the adhesion effect of the anti-corrosion material on the surface of the adapter holder 30.

According to some embodiments of the present application, see FIGS. 1 to 5, and FIGS. 10 to 13, the present application provides an energy storage box 100, including a plurality of first columns 10, a plurality of battery brackets 20, an adapter holder 30, a bolt 40, a nut 50, a first sleeve 60, and a second sleeve 70. The plurality of first columns 10 are disposed at intervals along a width direction Y of the energy storage box 100. The adapter holder 30 includes a plurality of second columns 31. The plurality of second columns 31 are disposed at intervals along the width direction Y of the energy storage box 100. Each of the second columns 31 is bolted to one of the first columns 10. The plurality of battery brackets 20 are disposed at intervals along a height direction Z of the energy storage box 100. Each of the battery brackets 20 is welded to the plurality of second columns 31 disposed at intervals along the width direction Y of the energy storage box 100.

The first column 10 is a hollow structure with a rectangular cross-section. The first column 10 includes a fourth wall 11 and a fifth wall 12 disposed opposite to each other. The fourth wall 11 and the fifth wall 12 are each provided with the second through hole 101 which the bolt 40 passes through and is disposed in. The second sleeve 70 is disposed in the first column 10. One end of the second sleeve 70 is sealingly connected to the edge of the second through hole 101 of the fourth wall 11, and the other end of the second sleeve 70 is sealingly connected to the edge of the second through hole 101 of the fifth wall 12. The second sleeve 70 isolates the interior of the first column 10 from outer world. The second column 31 is a hollow structure with a rectangular cross-section. The second column 31 includes a first wall 311 and a third wall 315 disposed opposite to each other. The first wall 311 is affixed to the fourth wall 11. The third wall 315 is welded to the battery bracket 20. The first wall 311 is provided with a first through hole 3111. The third wall 315 is provided with a third through hole 3151 coaxially provided with the first through hole 3111. The third through hole 3151 has an aperture larger than that of the first through hole 3111. The first sleeve 60 is disposed within the second column 31. The first sleeve 60 includes a bottom wall 61 and a side wall 62. The bottom wall 61 is affixed to the first wall 311 and covers the first through hole 3111. The bottom wall 61 is provided with a fourth through hole 611 corresponding to the first through hole 3111. The bolt 40 passes through and is disposed in the fourth through hole 611. The side wall 62 surrounds the bottom wall 61. The side wall 62 extends from the bottom wall 61, and extends in a direction away from the first column 10. One end that is of the side wall 62 and that is away from the bottom wall 61 is sealingly connected to the edge of the third through hole 3151. The first sleeve 60 isolates the interior of the second column 31 from the outer world. The bolt 40 enters into the second column 31 via the third through hole 3151. The bolt 40 fits with the nut 50 after passing through the first through hole 3111 and the second through hole 101 in sequence to tightly lock the adapter holder 30 with the first column 10.

For the energy storage box 100 according to an embodiment of the present application, the plurality of battery brackets 20 are welded to the adapter holder 30. The battery bracket 20 and the adapter holder 30 can be formed into a group beforehand. The grouped adapter holder 30 is then connected to the first column 10 by means of the bolt 40 when the energy storage box 100 is assembled. The adapter holder 30 is connected to the first column 10 with relatively high efficiency so that the plurality of battery brackets 20 are assembled with the first column 10 with relatively high efficiency, and the energy storage box 100 has relatively high assembly efficiency. The plurality of battery brackets 20 and the adapter holders 30 can be formed into a group outside a frame formed by the plurality of first columns 10 beforehand, and the plurality of adapter holders 30 can be synchronized to form a group, so that the energy storage box 100 has relatively high assembly efficiency.

Although the present application has been described with reference to preferred embodiments, various improvements may be made thereto and components thereof may be replaced with equivalents without departing from the scope of the present application. Particularly, technical features mentioned in the embodiments may be combined in any manner as long as there is no structural conflict. The present application is not limited to the specific embodiments disclosed in this specification, but includes all technical solutions falling within the scope of the claims.

## Claims

1. An energy storage box, comprising:
a first column, extending along a height direction of the energy storage box;
a plurality of battery brackets, configured to support a battery; and
an adapter holder, the battery bracket being connected to the first column through the adapter holder.

2. The energy storage box according to claim 1, wherein the adapter holder is detachably connected to the first column, and the battery bracket is fixedly connected to the adapter holder.

3. The energy storage box according to claim 2, wherein the battery bracket is welded to the adapter holder.

4. The energy storage box according to claim 2 or 3, wherein the adapter holder is connected to the first column through a locking member.

5. The energy storage box according to any one of claims 2-4, wherein the adapter holder comprises a second column, the second column extends along the height direction of the energy storage box, and the second column is detachably connected to the first column.

6. The energy storage box according to claim 5, wherein a plurality of first columns are disposed, a plurality of second columns are disposed, the plurality of second columns are disposed at intervals along a width direction of the energy storage box, each of the second columns is correspondingly connected to one of the first columns, and each of the battery brackets is connected to the plurality of second columns.

7. The energy storage box according to claim 5 or 6, wherein the second column is a one-piece molded structure.

8. The energy storage box according to any one of claims 1-5, wherein the adapter holder comprises a second column, the second column extends along the height direction of the energy storage box, the second column comprises a first wall, a second wall, and a first flap portion, the first wall is affixed to the first column, the second wall extends in a direction away from the first column from the first wall, the first flap portion is connected to one end of the second wall, the end is away from the first wall, the first flap portion and the first wall are positioned on the same side of the second wall or on the two sides of the second wall, respectively, and the first flap portion is connected to the battery bracket.

9. The energy storage box according to claim 8, wherein two second walls are disposed, the two second walls are disposed opposite to each other along a width direction of the energy storage box, the two first flap portions are disposed, the two first flap portions are in one-to-one correspondence to the two second walls, each of the first flap portions extends from one end of the corresponding second wall in a direction close to or away from the other second wall, the end is away from the first wall.

10. The energy storage box according to claim 9, wherein the two second walls are symmetrically disposed, and the two first flap portions are symmetrically disposed.

11. The energy storage box according to claim 9, wherein the second column further comprises two second flap portions, the two second flap portions are in one-to-one correspondence to the two first flap portions, each of the second flap portions extends from one end that is of the corresponding first flap portion and that is away from the second wall, and extends in a direction close to the first column.

12. The energy storage box according to any one of claims 8-11, wherein the first wall is provided with a first through hole, the first column is provided with a second through hole corresponding to the first through hole, the energy storage box further comprises a locking member, the locking member passes through and is disposed in the first through hole and the second through hole to tightly lock the second column with the first column.

13. The energy storage box according to any one of claims 1-5, wherein the adapter holder comprises a second column, the second column extends along the height direction of the energy storage box, and the second column is a hollow structure with a rectangular cross-section.

14. The energy storage box according to claim 13, wherein the second column comprises a first wall and a third wall disposed opposite to each other, the first wall is affixed to the first column, the third wall is connected to the battery bracket, the first wall is provided with the first through hole, the third wall is provided with a third through hole corresponding to the first through hole, the first column is provided with the second through hole corresponding to the first through hole, the energy storage box further comprises a locking member, the locking member passes through and is disposed in the first through hole and the second through hole to firmly lock the second column with the first column.

15. The energy storage box according to claim 14, wherein the energy storage box further includes a first sleeve, the first sleeve is disposed within the second column, two ends of the first sleeve are connected to an edge of the third through hole and an edge of the first through hole, respectively, and the locking member passes through and is disposed in the first sleeve.

16. The energy storage box according to claim 15, wherein, a first cavity is formed between an inner surface of the second column and an outer surface of the first sleeve, and the first sleeve is sealingly connected to the second column to close off the first cavity.

17. The energy storage box according to claim 15, wherein the third through hole has an aperture larger than that of the first through hole.

18. The energy storage box according to claim 17, wherein the first sleeve comprises a bottom wall and a side wall, the bottom wall covers the first through hole, the bottom wall is provided with a fourth through hole corresponding to the first through hole, the side wall surrounds the bottom wall, the side wall extends from the bottom wall in the direction away from the first column, one end that is of the side wall and that is away from the bottom wall is connected to an edge of the third through hole, and the locking member passes through and is disposed in the fourth through hole.

19. The energy storage box according to claim 18, wherein the first sleeve further comprises a boss, the boss is disposed on one side of the bottom wall and the side is away from the side wall, the boss is disposed in the first through hole, and the fourth through hole passes through the boss.

20. The energy storage box according to claim 19, wherein a gap is formed between the boss and the first column.

21. The energy storage box according to claim 15, wherein the third through hole has the same aperture as the first through hole.

22. The energy storage box according to claim 21, wherein the two ends of the first sleeve are connected to a hole wall of the first through hole and a hole wall of the third through hole, respectively, and the locking member passes through and is disposed in the third through hole, the first through hole and the second through hole.

23. The energy storage box according to claim 22, wherein an end portion of the locking member is abutted against an outer surface of the third wall.

24. The energy storage device according to claim 15, 21, 22, or 23, wherein along an axial direction of the first sleeve, cross-sectional areas of the first sleeve are equal from one end to the other.

25. The energy storage box according to any one of claims 13-24, wherein the adapter holder further comprises a blocking member, and the blocking member is configured to close off an end opening of the second column.

26. The energy storage box according to claim 12 or 14, wherein the first column is a hollow structure with a rectangular cross-section, the first column comprises a fourth wall and a fifth wall disposed opposite to each other, and the fourth wall and the fifth wall are both provided with the second through hole through which the locking member passes.

27. The energy storage box according to claim 26, wherein the energy storage box further comprises a second sleeve, the second sleeve is disposed in the first column, the locking member passes through and is disposed in the second sleeve, one end of the second sleeve is connected to the fourth wall, and the other end of the second sleeve is connected to the fifth wall.

28. The energy storage box according to claim 12 or 14, wherein the adapter holders are disposed on opposite sides of the first column, the locking member passes through the first column and the two adapter holders positioned on two sides of the first column, so that the two adapter holders are locked to the first column.

29. The energy storage box according to claim 4, 12 or 14, wherein the locking member comprises a bolt and a nut, and the bolt is threaded with and fits with the nut.

30. The energy storage box according to any one of claims 1-29, wherein the energy storage box further comprises a shell, the first column, the plurality of battery brackets, and the adapter holder are all disposed in the shell, and the first column is connected to the shell.

31. The energy storage box according to any one of claims 1-30, wherein the battery bracket is made of a galvanized steel, and the adapter holder and the first column are both made of steel.

32. The energy storage box according to any one of claims 1-31, wherein a surface of at least one of the battery bracket, the first column, and the adapter holder has an anti-corrosion layer.

33. An energy storage device, comprising a battery and the energy storage box according to any one of claims 1-32, wherein the battery is disposed in a battery bracket.
